# EUROPÄISCHE PATENTANMELDUNG

(11) **EP 0 677 461 A1**
(43) Veröffentlichungstag der Anmeldung: **18.10.1995**
(21) Anmeldenummer: 95103827.2
(22) Anmeldetag: 16.03.1995
(51) Int. Cl.: B65G 47/26, B65G 43/10

(54) **Staugutförderer für Stückgut aller Art**

(30) Priorität: 12.04.1994 DE 4412493
(71) Anmelder: BLUME-ROLLEN GmbH, D-42477 Radevormwald (DE)
(72) Erfinder: Wünnenberg , Manfred, D-40593 Düsseldorf (DE)
(74) Vertreter: Mentzel, Norbert, Dipl.-Phys.

(57) **Zusammenfassung**

Der elektromotorisch angetriebene Stückgut-Stetigförderer besteht aus Gerad- und Kurvenstücken einer Förderbahn, wobei die Förderbahn in Sektionen (22,23) aufgeteilt ist. Jede Sektion ist mit einem Schaltelement zur Steuerung des kontinuierlichen oder diskontinuierlichen Transportes des Stückgutes versehen.

Zur Schaffung eines staudrucklosen Fördersystems bei dem unabhängig von den Stückgut-Abmessungen und Stückgut-Gewichten das Transportgut definiert bewegt, verfolgt und angehalten werden kann, sind jeder Sektion (22,23) der Förderbahn ein Elektromotor (24) und außerdem jeweils ein einen Leistungsteil und einen Logikteil umfassendes Elektronikmodul (27) zugeordnet, wobei die Elektronikmodule zu einem Steuer- und Regelkreis miteinander verknüpft sind.

## Beschreibung

Die Erfindung betrifft einen Staugutförderer für Stückgut aller Art, der als elektromotorisch angetriebener Stückgut-Stetigförderer aus Grad- und Kurvenstücken einer Förderbahn besteht, wobei die Förderbahn in Sektionen aufgeteilt ist und jede Sektion mit einem Schaltelement zur Steuerung des kontinuierlichen oder diskontinuierlichen Transportes des Stückgutes versehen ist.

Bekannte Staugutförder der eingangs genannten Art können beispielsweise Rollenförderer sein, deren Stauförderrollen durch ein kontinuierlich umlaufendes, motorisch angetriebenes Band über eine zugehörige Zwischenrolle angetrieben sind. Beim Stauvorgang wird die Zwischenrolle weggeschwenkt und damit die Förderrolle antriebslos. Der Schwenkvorgang der Förderrolle wird durch das über die Rollen bewegte Stückgut ausgelöst, indem ein zwischen die Rollen fassendes Schaltelement durch den Boden des Stückgutes niedergedrückt wird. Unabhängig davon ob nun im einen Fall durch mechanische Hebelgestänge verschwenkbare Stauförderrollen dem Antriebsband sektionsweise zu- bzw. abgeschaltet werden können, oder ob im anderen Fall die sektionsweise Zu- bzw. Abschaltung auf pneumatische Weise erfolgt kann es zu Störungen durch Aufeinanderfahren des Stückgutes kommen, was insbesondere durch unterschiedliche Form im Bodenbereich des Stückgutes möglich ist, indem nämlich das Schaltelement in Bodenausnehmungen oder Verformungen des Stückgutes hochschnellen kann, obschon das Schaltelement gedrückt bleiben müßte, wodurch die vorhergehende Förderbahnsektion dem Antrieb zugeschaltet wird und somit das darauf befindliche Stückgut bereits weiterfährt und auf das vorhergehende Stückgut aufgeschoben wird. Man hat nun versucht durch Zwischenschaltung beispielsweise pneumatischer Zeitglieder die Anfahrbewegung des nachfolgendes Stückgutes zu verzögern, was jedoch insbesondere dann erfolglos bleibt, wenn das Stückgut einen Fahrweg durchläuft, der außerhalb des Schaltelementes verläuft.

Aufgabe der Erfindung ist es unabhängig von den Stückgut-Abmessungen und -Gewichten ein staudruckloses Fördersystem zu schaffen, mit welchem das Transportgut definert bewegt, verfolgt und angehalten werden kann.

Diese Aufgabe ist erfindungsgemäß dadurch gelöst, daß jeder Sektion der Förderbahn ein Elektromotor und außerdem jeweils ein Leistungsteil und Logikteil umfassendes Elektronikmodul zugeordnet sind, wobei die Elektronikmodule zu einem Steuer- und Regelkreis miteinander verknüpft sind. Dabei sind außer den Geradstücken einer Förderbahn vorteilhafterweise auch deren Kurvenstücke in angetriebene Sektionen unterteilt.

Um das im Logikmodul enthaltende Fehlerdiagnosesystem mit dem Leistungsteil zu kommunizieren ist der Leistungsteil des Elektronikmoduls für eine Spannung von 220 V Wechselstrom, vorzugsweie jedoch 380 V Drehstrom ausgelegt, während zur Verarbeitung und Weitergabe prozeßrelevanter Daten der Logikteil des Elektronikmodules für eine Steuerspannung von 5 V, vorzugsweise 24 V Gleichstrom ausgelegt ist. Dabei ist dem Elektronikmodul vorteilhaft ein Bussystem zur zustandsabhängigen Überwachung mit einem Bediengerät zugeordnet.

Zur Programmierung der Logikteile ist vorzugsweise in den Steuer- und Regelkreis ein PC integrierbar, wobei auch ein Fehlerdiagnosesystem angeschlossen werden kann. Somit läßt sich insbesondere der Nennstrom und die Bremszeit des Elektromotors über den PC programmieren.

Eine Automatition des Staugutförderers und seiner peripheren Geräte läßt sich erzielen, indem in den Steuer- und Regelkreis Objekterkennungssysteme, wie Lichtschranken, Kodierer, Barcode-Leser u. dgl. zur automatischen Betätigung von Robotern für die Montage und Demontage des Stückgutes, von Robotern für die Palettierung des Stückgutes sowie zur Betätigung von Fixierstationen integriert sind. Damit ist eine definierte Objektverfolgung möglich mit dem Ziel, das Transportgut (Stückgut) insbesondere bei Kommisioniersystemen an bestimmten, jedoch unregelmäßigen Pickplätzen gemäß den Anforderungen eines Leitrechners anhalten und verfolgen zu können, um weitere manuelle Bearbeitungsgänge durchzuführen. Außerdem besteht auch die Möglichkeit ohne den Einsatz fototechnischer Elemente durch die digitalisierte und definierte Objektvefolgung eine Prozeß-Visualisierung entfernt vom Geschehen durchzuführen.

Die Erfindung ist in einem Ausführungsbeispiel auf der Zeichnung dargestellt und wird nachfolgend näher erläutert. Es zeigen:
- Fig. 1: einen der Veranschaulichung des Erfindungsgegenstandes dienenden Rollenförderer in einer Draufsicht, mit dem Fixierstationen und Roboter zum Handling des Stückgutes zusammenwirken,
- Fig. 2: ein Kurvenstück einer Rollenbahn des aus Fig. 1 ersichtlichen Rollenförderers in einer gegenüber Fig. 1 vergrößerten Darstellung unter Einbeziehung einer Lichtschranke,
- Fig. 3: eine konische Rolle mit integriertem Trommelmotor, die Bestandteil eines Kurvenstücks der Rollenbahn ist, und der ein im Tragrahmen des Rollenförderers angeordnetes Elektronikmodul zugeordnet ist,
- Fig. 4: das im Tragrahmen plazierte Elektronikmodul in einem Vertikalschnitt durch den Tragrahmen.

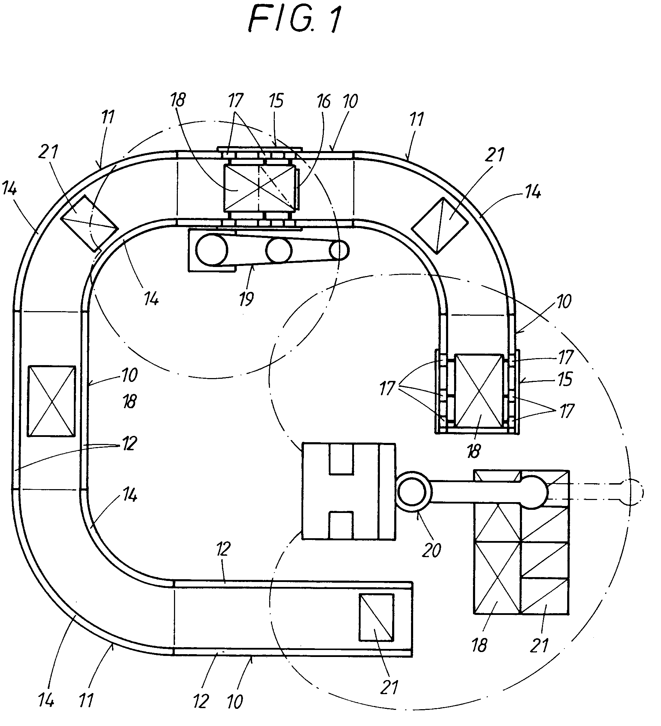

Der aus Fig. 1 ersichtliche Rollenförderer setzt sich aus Rollenbahn-Geradstücken 10 und aus Rollenbahn-Kurvenstücken 11 zusammen. Während die Geradstücke10 in ihrem Tragrahmen 12 in bekannter Weise gelagerte und im einzelnen nicht dargestellte zylindrische Rollen aufweisen, sind die Kurvenstücke 11 mit konischen Rollen 13 bestückt, die ebenfalls in kreisbogenförmigen Tragrahmen 14 gelagert sind. Dabei können dieses Rollenbahn-Kurvenstücke abweichend von der dargestellten 90° -Form abweichen und als beliebiger Kreisbogenabschnitt ausgebildet sein.

Der Antrieb der zylindrischen Rollen der Rollenbahn-Geradstücke 10 kann beispielsweise über einen endlosen Riementrieb erfolgen, der von einem Motor betrieben wird und auf der Unterseite über Andruckrollen an die Zylinderrollen der Rollenbahn-Geradstücke 10 angedrückt ist. Dabei läßt sich der Antrieb derart ausbilden, daß mit einem Motor sämtliche Zylinderrollen eines Geradstückes 10 angetrieben sind, wobei es jedoch auch denkbar ist, die Zylinderrollen eines Rollenbahn-Geradstücks 10 in mehrere aufeinanderfolgende Abschnitte Sektionen aufzuteilen, wobei jeder Abschnitt von einem separaten Motor betrieben wird.

Wie aus Fig. 1 entnommen werden kann, ist im etwa mittleren Bereich des Rollenförderers einem Rollenbahn-Geradstück 10 eine Fixierstation 15 zugeordnet, wobei auch eine solche Fixierstation 15 am Ende des Rollenförderers angeordnet ist. Derartige bekannte Fixierstationen richten über eine Sperre 16 und druckmittelbetriebene Stempel 17 das beispielsweise aus Behälter und Kartons gebildete Stückgut 18 lagegerecht auf dem Rollenförderer aus, so daß über Roboter 19 bzw. 20 das Handling des Stückgutes 18 selbst oder Stückgutteilen davon möglich ist. Beispielsweise kann der Roboter 19 dazu dienen, aus beispielsweise einem das Stückgut 18 bildenden Behälter Stückgutteile in Form von Päckchen, Flaschen u. dgl. herausnehmen, oder aber derartige Behälter mit derartigen Stückgutteilen zu befüllen. Der Roboter 20 am Ende des Rollenförderers mag dazu dienen, das Stückgut vom Rollenförderer abzunehmen und auf Paletten zu stapeln. Ein derartiger Roboter 20 ist dazu geeignet, das Stückgut vom Palettenstapel auf den Rollenförderer aufzusetzen, der im vorliegenden Fall zu Beginn aus einem Rollenbahn-Geradstück 10 besteht. Dabei ist es möglich, Stückgut von unterschiedlicher Größe sowohl zu handhaben als auch zu transportieren. Beispielsweise weist das mit dem Bezugszeichen 21 versehene Stückgut die halbe Grundfläche des mit dem Bezugszeichen 18 versehenen Stückgutes auf, wobei es sich, wie eingangs bereits dargelegt, um Kartons, Behälter od. dgl. handeln kann.

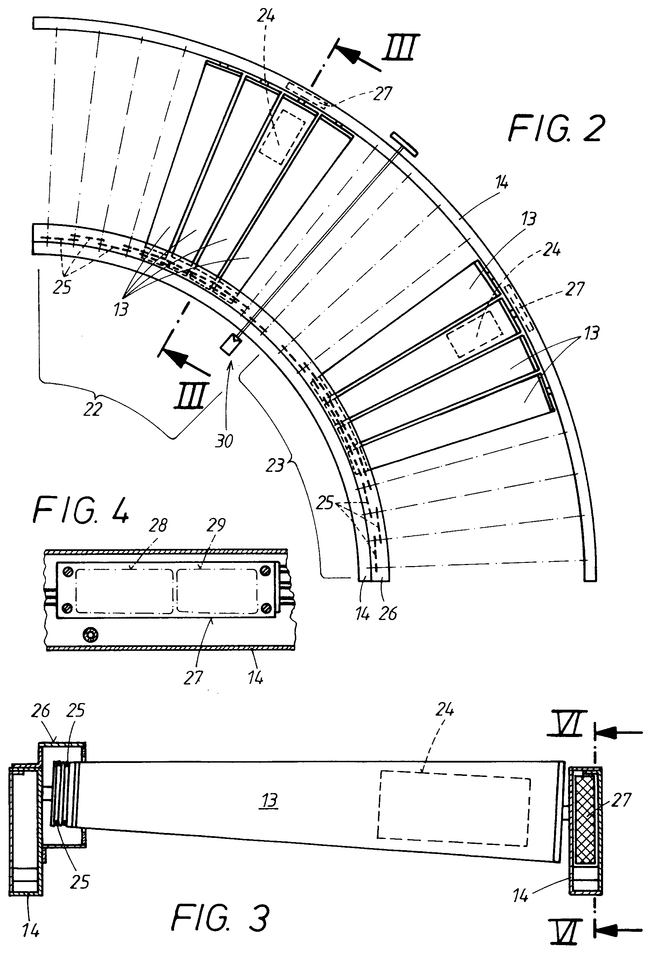

Das in Fig. 2 dargestellte Rollenbahn-Kurvenstück 11 ist in zwei Antriebs-Sektionen 22 und 23 unterteilt, wobei jeder Sektion 22, 23 ein Elektromotor 24 zugeordnet ist, der beispielsweise als Trommelmotor ausgebildet sein mag und in diesem Fall in eine der Rollen 13 eingebaut ist. Jede der Rollen 13 ist mit ihrer benachbarten Rolle beispielsweise durch einen Riementrieb 25 derart verbunden, daß alle Rollen einer Antriebssektion 22, 23 mit gleicher Drehzahl und Drehrichtung umlaufen, welche der Drehzahl und Drehrichtung der Rollen des gesamten Rolenförderers entspricht. Bei dem aus Fig. 2 ersichtlichen Ausführungsbeispiel sind die Riementriebe 25 sämtlich auf der Innenseite des Rollenbahn-Kurvenstücks 11 angeordnet und in ein dem inneren Tragrahmen 14 nebengeordnetes Gehäuse 26 eingekapselt. Der Einfachheit halber sind nur einige der kegeligen Rollen 13 in das aus Fig. 2 ersichtliche Rollenbahn-Kurvenstück 11 eingezeichnet, während die Lage der Achsen der restlichen kegeligen Rollen durch strichpunktierte Linien angedeutet sind.

Dem Elektromotor 24 einer jeden Antriebs-Sektion 22, 23 bzw. jeden Rollenbahn-Geradstücks 10 und Rollenbahn-Kurvenstücks 11 ist ein intelligentes Bauteil darstellendes Elektronikmodul 27 zugeordnet, wobei diese Elektronikmodule 27 miteinander zu einem Regelkreis verknüpft sind. Diese Elektronikmodule 27 lassen sich auf einfache Weise im äußeren Tragrahmen 12 bzw. 14 eines jeden Rollenbahn-Geradstücks 10 und eines Rollenbahn-Kurvenstücks 11 plazieren, wobei auch die zur Verknüpfung erforderlichen Leitungen im Tragrahmen 12 bzw. 14 untergebracht sein können. Jedes Elektronikmodul umfaßt einen Leistungsteil 28 und einen Logikteil 29, wobei der Leistungsteil für eine Betriebsspannung von 380 V Drehstrom ausgelegt ist, während der Logikteil des Elektronikmoduls für eine Steuerspannung von 5 V Gleichstrom oder aber von 24 V Gleichstrom ausgelegt ist. Um die Betriebszustände peripherer Geräte, wie beispielsweise von Elektromotoren 24 für den Rollenantrieb, der Lichtschranken 30 u. dgl. kontrollieren zu können, enthalten die Elektronikmodule BUS-Leitungen. Dabei sind die Lichtschranken 30 im Bereich von Elektromotoren 24 angeordnet, um Steuersignale für vorangehende bzw. nachfolgende Motoren beim Durchlauf des Stückgutes abzugeben.

Wie bereits vorstehend erwähnt, lassen sich mit dem Elektronikmodul 27 auch Personal-Computer (PC's) und im Bedarfsfall auch Monitoren bei entsprechender Auslegung der Elektronikmodule 27 auch für eine entsprechende Vielzahl von busfähigen Stationen verknüpfen.

Wie bereits erwähnt, gibt die vorbeschriebene Ausführungsform den Erfindungsgegenstand nur beispielsweise wieder, der keinesfalls allein darauf beschränkt ist. Es sind vielmehr noch mancherlei Ausgestaltuingen und andere Ausführungen des Erfindungsgegenstandes denkbar. Außerdem sind alle in der Beschreibung erwähnten und in der Zeichnung dargestellten Merkmale erfindungswesentlich, auch wenn sie in den Ansprüchen nicht ausdrücklich beansprucht sind.

### Bezugszeichenliste:

- 10: Geradstück
- 11: Kurvenstück
- 12: Tragrahmen
- 13: Rolle
- 14: Tragrahmen
- 15: Fixierstation
- 16: Sperre
- 17: Stempel
- 18: Stückgut
- 19: Roboter
- 20: Roboter
- 21: Stückgut
- 22: Antriebs-Sektion
- 23: Antriebs-Sektion
- 24: Elektromotor/Trommelmotor
- 25: Riementrieb
- 26: Gehäuse
- 27: Elektronikmodul
- 28: Leistungsteil
- 29: Logikteil
- 30: Lichtschranke

## Patentansprüche

1. Staugutförderer für Stückgut aller Art, der als elektromotorisch angetriebener Stückgut-Stetigförderer aus Gerad- und Kurvenstücken einer Förderbahn besteht, wobei die Förderbahn in Sektionen aufgeteilt ist und jede Sektion mit einem Schaltelement zur Steuerung des kontinuierlichen oder diskontinuierlichen Transportes des Stückgutes versehen ist,
**dadurch gekennzeichnet,**
daß jeder Sektion (22, 23) der Förderbahn (10, 11) ein Elektromotor (24) und außerdem jeweils ein einen Leistungstell (28) und einen Logikteil (29) umfassendes Elektronikmodul (27) zugeordnet sind, wobei die Elektronikmodule (27) zu einem Steuer- und Regelkreis miteinander verknüpft sind.

2. Staugutförderer nach Anspruch 1, dadurch gekennzeichnet, daß außer den Geradstücken (10) einer Förderbahn auch deren Kurvenstücke (11) in angetriebene Sektionen (22, 23) unterteilt sind.

3. Staugutförderer nach Anspruch 1 und/oder 2, dadurch gekennzeichnet, daß der Leistungsteil (28) des Elektronikmoduls (27) für eine Spannung von 220 V Wechselstrom, vorzugsweise 380 V Drehstrom und der Logikteil (29) des Elektronikmoduls (27) für eine Steuerspannung von 5 V, vorzugsweise 24 V Gleichstrom ausgelegt ist.

4. Staugutförderer nach einem oder mehreren der vorhergehenden Ansprüche, dadurch gekennzeichnet, daß dem Elektronikmodul (27) ein Bussystem zur zustandsabhängigen Überwachung mit einem Bediengerät zugeordnet ist.

5. Staugutförderer nach einem oder mehreren der vorhergehenden Ansprüche, dadurch gekennzeichnet, daß in den Steuer- und Regelkreis ein PC zur Programmierung der Logikteile (29), bedearfsweise auch mit einem Fehlerdiagnosesystem integrierbar ist.

6. Staugutförderer nach einem oder mehreren der vorhergehenden Ansprüche, dadurch gekennzeichnet, daß in den Steuer- und Regelkreis Objekterkennungssysteme, wie Lichtschranken (30), Codierer, Barcode-Leser u. dgl. zur automatischen Betätigung von Robotern (19) für die Montage und Demontage des Stückgutes (18), von Robotern (20) für die Pallettierung des Stückgutes (18) sowie zur Betätigung von Fixierstationen (15) integriert sind.
